Europäisches Patentamt

European Patent Office

Office européen des brevets

(19)

(11) Veröffentlichungsnummer: **0 315 028 B1**

(12) **EUROPÄISCHE PATENTSCHRIFT**

(45) Veröffentlichungstag der Patentschrift: **21.11.91**

(51) Int. Cl.⁵: **G04G 7/02, H04J 3/06**

(21) Anmeldenummer: **88117745.5**

(22) Anmeldetag: **25.10.88**

(54) **Verfahren zur Sendesynchronisation, Steuereinrichtung und Sender zur Durchführung des Verfahrens sowie Anwendung des Verfahrens.**

(30) Priorität: **28.10.87 CH 4250/87**

(43) Veröffentlichungstag der Anmeldung:
**10.05.89 Patentblatt 89/19**

(45) Bekanntmachung des Hinweises auf die
Patenterteilung:
**21.11.91 Patentblatt 91/47**

(84) Benannte Vertragsstaaten:
**AT BE DE ES FR GB GR IT LU NL SE**

(56) Entgegenhaltungen:
**EP-A- 0 084 165**
**EP-A- 0 253 096**
**CA-A- 1 158 739**
**FR-A- 2 564 668**

(73) Patentinhaber: **FIRMA ERIKA KÖCHLER**
**Fälmisstrasse 21**
**CH-8833 Samstagern(CH)**

(72) Erfinder: **Köchler, Helmut**
**Fälmisstrasse 21**
**CH-8833 Samstagern(CH)**

(74) Vertreter: **Blum, Rudolf Emil Ernst et al**
**c/o E. Blum & Co Patentanwälte Vorderberg**
**11**
**CH-8044 Zürich(CH)**

## Beschreibung

Die Erfindung betrifft ein Verfahren zur Synchronisation mehrerer Sender, welche mit einer mit einer Uhr versehenen Steuereinrichtung verbunden sind, wobei jeder Sender in bekanntem Abstand von der Steuereinrichtung angeordnet ist und eine zu synchronisierende Uhr aufweist.

Ferner betrifft die Erfindung eine Sendersteuereinrichtung und einen Sender zur Durchführung des Verfahrens und betrifft eine Anwendung des Verfahrens bei einem Funkrufnetz.

Bei einem Einsatz mehrerer Funksender, welche ein Gebiet flächendeckend mit dem gleichen Signal versorgen, kann sich das Problem der Synchronisation der Sender ergeben, dies z.B. bei einem Ortsrufnetz, bei dem digitale Erkennungskodes für die einzelnen Rufempfänger gesendet werden.

Die Synchronisation, von der hier die Rede ist, bezieht sich dabei auf die Modulation der Sendersignale, nicht auf deren HF-Träger. Die HF-Träger werden frei laufengelassen und wenn nötig, mit einem gewissen Frequenzversatz betrieben, damit sich keine stehenden Wellen ausbilden, die zu "Löchern" im Versorgungsgebiet führen.

Solange z.B. ein Rufempfänger (Pager) nur von einem Sender Signale empfängt, stellt sich das Synchronisationsproblem nicht. Sobald er sich jedoch im gemeinsamen Versorgungsgebiet zweier oder mehrerer Sender befindet, die nicht synchron arbeiten, wird er grosse Probleme haben, die empfangenen Signale richtig zu detektieren. In den meisten Fällen ist es ja aus Gründen der Versorungssicherheit sehr erwünscht, dass sich die Versorgungsgebiete der einzelnen Sender überlappen.

Es gibt natürlich auch Möglichkeiten, ohne Synchronisation auszukommen, jedoch haben alle diese Varianten grosse Nachteile, vor allem bezüglich Frequenz- und Zeitökonomie.

Bei bekannten Funkeinrichtungen mit mehreren Sendern sind diese über Modulationsleitungen direkt mit der Signalquelle, z.B. mit der Rufzentrale eines Funkrufnetzes, verbunden. Die Leitungen werden mit Laufzeitreglern versehen, die eine gewisse Kompensation der unterschiedlichen Distanzen zwischen Rufzentrale und Sendern ermöglichen.

Abgeglichen wird vielfach aber nur die Strecke bis zum Sendereingang. Für die Synchronisation sind jedoch die Signale an den Antennen massgebend, so dass die unterschiedlichen Laufzeiten in den Sendern nicht berücksichtigt werden.

Ein wesentlicher Nachteil des Verfahrens ist, dass sich die Eigenschaften der Modulationsleitungen und der beteiligten Geräte infolge von Witterungseinflüssen, Temperatur und Alterung laufend verändern. Es ergibt sich daraus ein relativ grosser Aufwand für das periodische Justieren der Anlage.

Fällt eine Leitung aus, muss die Ersatzleitung in jedem Fall neu eingeregelt werden.

Der Erfindung liegt deshalb die Aufgabe zugrunde, ein Verfahren der eingangs genannten Art zu schaffen, welches die genannten Nachteile nicht aufweist und eine einfache und schnelle Sendersynchronisation erlaubt. Dies wird dadurch erreicht, dass zur Synchronisation der Uhren dieser Sender von jedem Sender eine Istuhrzeitmeldung ausgestrahlt wird, die von der Steuereinrichtung mittels eines Funkempfängers empfangen wird und deren Empfangsuhrzeit in der Steuereinrichtung bestimmt und von dieser an den Sender übermittelt wird und dass in jedem Sender Istuhrzeitmeldung, Empfangsuhrzeit, Sendesignallaufzeit zwischen Sender und Funkempfänger sowie die momentane Senderuhrzeit verknüpft werden, um die synchronisierte Senderuhrzeit zu erhalten. Ferner stellt sich die Aufgabe, eine Sendesteuereinrichtung und einen Sender zur Durchführung dieses Verfahrens zu schaffen. Dies wird durch eine Sendersteuereinrichtung mit den kennzeichnenden Merkmalen des Patentanspruches 7 erreicht, bzw. durch einen Sender mit den kennzeichnenden Merkmalen des Patentanspruches 8.

Ferner betrifft die Erfindung eine Anwendung des Verfahrens gemäss Patentanspruch 9.

Bei einer bevorzugten Anwendung werden zwei Gruppen von Sendern zunächst intern und nachfolgend miteinander synchronisiert.

Nachfolgend werden vorteilhafte Ausführungsbeispiele der Erfindung anhand der Zeichnungen näher erläutert. Dabei zeigt:

Fig. 1 schematisch eine Anordnung von drei zu synchronisierenden Sendern und der Steuereinrichtung;

Fig. 2 schematisch zwei Gruppen von zu synchronisierenden Sendern mit zugehörigen Sendesteuereinrichtungen;

Fig. 3 ein Blockschaltbild einer Funkrufanlage;

Fig. 4 ein Blockschaltbild einer Sendesteuereinrichtung.

Damit ein im überlappenden Sendegebiet mehrerer Sender befindlicher Empfänger dieselbe, von allen Sendern ausgesandte Nachricht eindeutig identifizieren kann, muss die Nachricht von allen Sendern zur selben Zeit abgestrahlt werden. Zur selben Zeit abgestrahlt bedeutet dabei, dass die Abstrahlzeitpunkte des Nachrichtensignals von den Sendeantennen eine vorausbestimmte Zeitdifferenz nicht überschreiten. So sind bei Funkrufnetzen, in welchen als Nachrichten Digitalsignale für die Rufempfänger ausgestrahlt werden, die

2

EP 0 315 028 B1

Meldungsprotokolle (z.B. im postalisch spezifizierten POCSAG-Format) und die geforderte Zeitdifferenz, bzw. die Synchronisationsgenauigkeit bestimmt. Diese beträgt z.B. 1/4 Bit, was bei 512 Bit/s einer Zeitdifferenz von 488 $\mu$s entspricht.

Jede auszusendende Nachricht wird bei solchen Funkrufnezten mit einer Sollsendezeit versehen, und sobald die interne Uhr jedes Senders diese Zeit erreicht hat, wird diese Nachricht gesendet. Es ist daher nötig, die Senderuhren zu synchronisieren, damit die geforderte Genauigkeit erreicht werden kann. Ferner ist zu beachten, dass die Sendersignalverzögerungszeit für jeden Sender unterschiedlich (aber bekannt) ist. Da die Uhren (Taktoszillatoren) der Sender verschiedene Genauigkeit und unterschiedlichen Drift aufweisen, muss die Synchronisation von Zeit zu Zeit wiederholt werden.

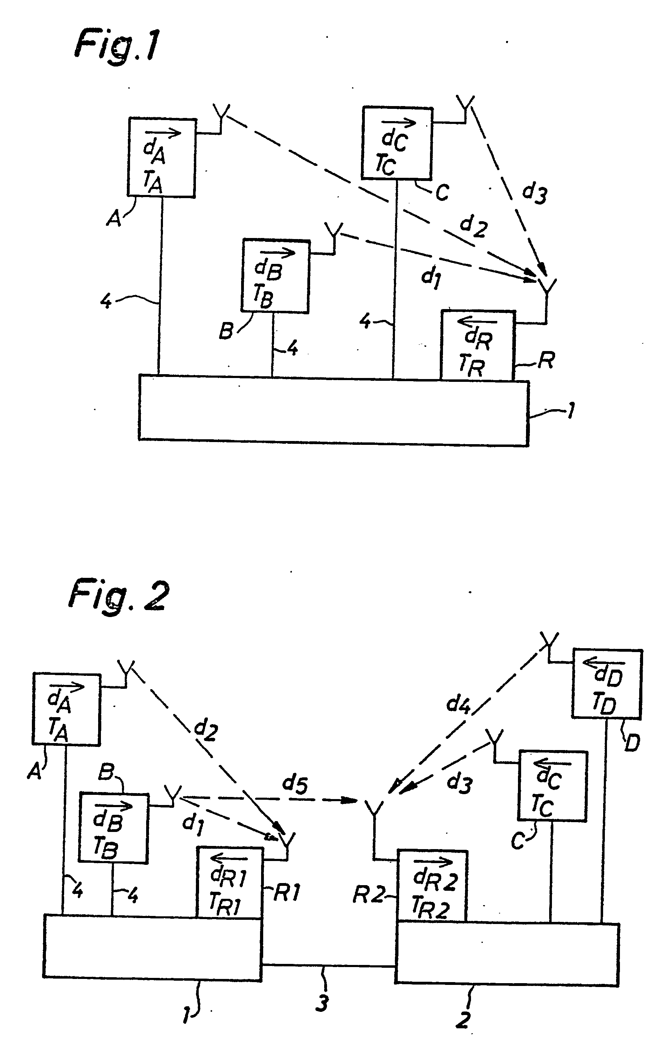

Das erfindungsgemässe Verfahren soll nun anhand der Senderkonfiguration von Fig. 1 erklärt werden. Dabei sind mit A, B und C drei Funksender bezeichnet. Die Sender sind mit einer Sendesteuereinrichtung 1 leitungsverbunden, welche über die Leitungen 4 Steuerbefehle und auszusendende Nachrichten an die Sender schickt. Dabei bedeuten:

$T_A, T_B, T_C, T_R$ aktueller Stand der Uhren in den Sendern sowie im Empfänger R

$d_A, d_B, d_C$ Signalverzögerungszeit vom Sendereingang (digitales Signal) bis zur Antenne (moduliertes Signal)

$d_R$ Signalverzögerungszeit von der Antenne (moduliertes Signal) bis zum Empfängerausgang (digitales Signal)

$d_1, d_2, d_3$ Signallaufzeit in der Atmosphäre (3,333 $\mu$s/km)

Das Ziel der Synchronisation ist es, dass gleiche Modulationssignale jeweils zur genau gleichen Zeit von den Antennen der beiden Sender abgestrahlt werden.

Die Synchronisationsbedingung lautet als:

$$T_A + d_A = T_B + d_B = T_C + d_C$$

Die eigentliche Synchronisation wird nun wie folgt durchgeführt. Zunächst übermittelt die Steuereinrichtung 1 einen Befehl an die Sender, durch welchen diese veranlasst werden, ihre Senderuhrzeit auf eine Zeit vor der Empfänger- bzw. Steuereinrichtungsuhrzeit zu stellen; es gilt daher

$$T_A < T_R; T_B < T_R; T_C < T_R \quad (1)$$

Danach werden die Sender von der Sendesteuereinrichtung (in beliebiger Reihenfolge) veranlasst, eine Synchronisationsmeldung abzustrahlen, welche ihre lokale Uhrzeit (Istuhrzeit) enthält. Zum Beispiel strahlt der Sender A eine Synchronisationsmeldung ab, welche seine Istuhrzeit $T_A$, enthält.

Der Empfänger R registriert seine Uhrzeit $T_R$, Empfangsuhrzeit), zu welcher er die Synchronisationsmeldung des Senders A empfangen hat. Dabei gilt

$$T_{R'} = T_{A'} + d_A + d_1 + d_R + T_A - T_R \quad (2)$$

Bei dem Term $T_A - T_R$ handelt es sich dabei um die unbekannte Zeitdifferenz der Uhren von Sender A und Empfänger R.

Ueber die Leitungsverbindung 4 übermittelt die Steuereinrichtung den Wert $T_R$, an den Sender A.

Der Sender A bildet einen Korrekturwert für seine Uhr aus dem übermittelten Wert $T_R$, und den ihm bekannten Werten $T_A$, und $d_1$ auf folgende Weise:

$$K = T_{R'} - T_{A'} - d_1 \quad (3)$$

Ein Vergleich mit Formel (2) zeigt, dass gilt

$$K = T_{R'} - T_{A'} - d_1 = T_A - T_R + d_A + d_R \quad (4)$$

Der Korrekturwert K wird nun vom Sender von seiner jetzigen Uhrzeit $T_A$ subtrahiert, um die neue, synchronisierte Uhrzeit $T_{AS}$ zu bilden. Dabei gilt mit (4)

$$T_{AS} = T_A - K = T_A - T_A + T_R - d_A - d_R = T_R - d_A - d_R \quad (5)$$

Das heisst, die neue Zeit $T_{AS}$ ist von der alten Sendeuhrzeit $T_A$ unabhängig.

Die Uhren der übrigen Sender B und C werden mit den gleichen Schritten korrigiert (in den Formeln sind lediglich die Indizes A durch B bzw. C zu ersetzen).

Die neuen Zeiten sind demnach:

3

$$\text{Sender A:} \quad T_{AS} = T_R - d_A - d_R$$

$$\text{Sender B:} \quad T_{BS} = T_R - d_B - d_R \qquad (6)$$

$$\text{Sender C:} \quad T_{CS} = T_R - d_C - d_R$$

Mit jedem Paket von Nutzinformation erhalten die Sender eine Zeitangabe T, die den Sendezeitpunkt bestimmt.

Die Zeiten, zu denen die Nutzinformation an den Antennen ercheint, sind

$$\text{Sender A:} \quad T_{AS} + d_A = T_R - d_R$$

$$\text{Sender B:} \quad T_{BS} + d_B = T_R - d_R \qquad (7)$$

$$\text{Sender C:} \quad T_{CS} + d_C = T_R - d_R$$

Daraus folgt:

$$T_{AS} + d_A = T_{BS} + d_B = T_{CS} + d_C$$

Die Synchronisationsbedingung ist damit für die neuen Uhrzeiten erfüllt.

Der Synchronisationsvorgang spielt sich auch für eine grössere Anzahl von Sendern gleich ab. Ebenfalls ist es unerheblich, ob der ganze Vorgang zunächst für den Sender A erfolgt und Sender B nachfolgend seine Synchronisationsmeldung sendet oder ob zunächst alle Sender A,B,C nacheinander ihre Synchronisationsmeldungen senden und nachfolgend nacheinander oder gleichzeitig die jeweiligen Zeiten $T_R$, an die Sender übermittelt werden.

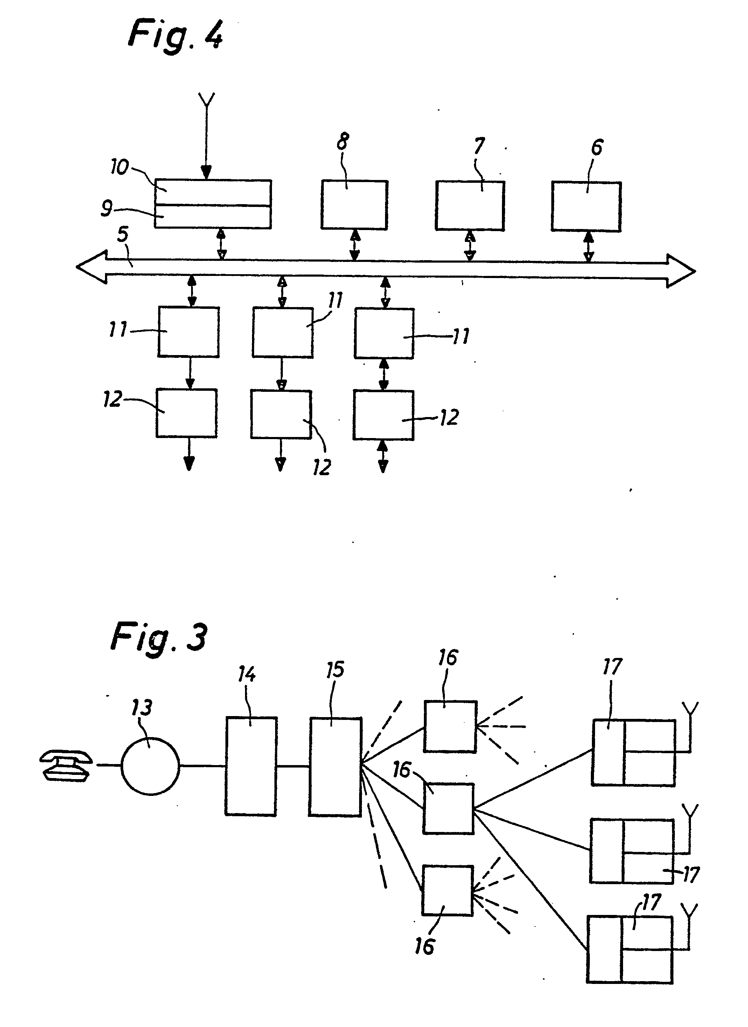

Mit Bezug auf Fig. 2 soll das Verfahren geschildert werden, wenn die Sender in mehrere Gruppen eingeteilt sind, wobei jede Gruppe eine Sendersteuereinrichtung mit Empfänger aufweist. In Fig. 2 sind zwei Gruppen von Sendern dargestellt, die erste Gruppe mit den sendern A und B und der Sendersteuereinrichtung 1 mit dem Empfänger R1 und die zweite Gruppe mit den Sendern C und D sowie der Sendersteuereinrichtung 2 mit dem Empfänger R2. Zusätzlich zu den bereits im Zusammenhang mit Fig. 1 geschilderten Voraussetzungen ist bei dem Verfahren mit zwei Gruppen vorausgesetzt, dass mindestens ein Sender der einen Gruppe Funkverbindung mit dem Empfänger der anderen Gruppe hat. Im gezeigten Beispiel ist angenommen, diese Funkverbindung bestehe zwischen dem Sender B der ersten Gruppe und dem Empfänger R2 der zweiten Gruppe, Ferner besteht eine Kommunikationsverbindung zwischen den beiden Sendersteuereinrichtungen, sei es über eine einfache Leitungsverbindung 3 oder über eine den Sendersteuereinrichtungen gemeinsame Steuervorrichtung (Netzsteuereinheit 15; Fig. 3) für das Funknetz.

Die Synchronisationsbedingung für das vorliegende Beispiel lautet:

$$T_A + d_A = T_B + d_B = T_C + d_C = T_D + d_D \qquad (8)$$

Die Synchronisation wird wie folgt durchgeführt:

Zunächst werden die beiden Gruppen jede für sich gemäss dem erfindungsgemässen Verfahren synchronisiert, wie dies im Zusammenhang mit Fig. 1 erläutet worden ist. Die neuen Zeiten sind demnach

EP 0 315 028 B1

$$\text{Sender A:} \quad T_A = T_{R1} - d_A - d_{R1}$$

$$\text{Sender B:} \quad T_B = T_{R1} - d_B - d_{R1} \qquad (9)$$

$$\text{Sender C:} \quad T_C = T_{R2} - d_C - d_{R2}$$

$$\text{Sender D:} \quad T_D = T_{R2} - d_D - d_{R2}$$

Danach wird die eine Gruppe erneut nach dem Verfahren synchronisiert, diesmal mit Hilfe des Empfängers der anderen Gruppe. Anhand des Beispiels von Fig. 2 im einzelnen:

Alle Uhren der Gruppe 1 werden um den gleichen konstanten Betrag zurückgestellt, so dass sie eine frühere Zeit als die Empfängeruhr vom Empfänger R2 erhalten:

$$T_A = T_B; T_B < T_{R2} \qquad (10)$$

Danach sendet Sender B eine Synchronisationsmeldung, welche die aktuelle Zeit (Ist-Uhrzeit) $T_B$. von Sender B enthält.

Der Empfänger R2 registriert den Zeitpunkt $T_{R2}$, zu dem er diese Synchronisationsmeldung empfängt. Es gilt:

$$T_{R2'} = T_{B'} + d_B + d_5 + T_B - T_{R2} \qquad (11)$$

Der Term $T_B - T_{R2}$ stellt die unbekannte Zeitdifferenz zwischen der Uhr des Senders B und der Uhr des Empfängers R2 dar.

Danach teilt die Steuereinrichtung 2 den Wert $T_{R2}$. an die Steuereinrichtung 1 der ersten Gruppe und damit an die Sender A und B mit.

Alle Sender der ersten Gruppe korrigieren ihre Uhr mittels des Korrekturwertes K2, welcher wie folgt gebildet ist:

$$K2 = T_{R2}' - T_{B'} - d_5 \qquad (12)$$

Im Vergleich mit (11) ergibt sich

$$K2 = T_B - T_{R2} + d_B \, d_{R2} \qquad (13)$$

Da von der ersten Synchronisation der ersten Gruppe her weiterhin $T_A = T_B$ gilt, kann der Korrekturwert K2 auch zur Korrektur der Uhr im Sender A verwendet werden (bzw. zur Korrektur aller weiterer Sender Gruppe 1). Dabei ist aber zu beachten, dass in diesem Fall der Gruppensynchronisation immer nur der Signalverzögerungswert ($d_B$) des einen die Synchronisationsmeldung sendenden Senders (B) in den Korrekturwert eingeht. Die weiteren Sender der ersten Gruppe werden also nicht genau synchron laufen.

Die neuen Zeiten der Sender von Gruppe 1 sind demnach:

$$\text{Sender A:} \quad T_{AB} = T_A - K2 = T_{R2} - d_B - d_{R2}$$

$$(14)$$

$$\text{Sender B:} \quad T_{BB} = T_B - K2 = T_{R2} - d_B - D_{R2}$$

Die Zeiten, zu denen die Nutzinformation an den Antennen erscheinen, sind demzufolge:

5

$$\text{Sender A:} \quad T_{A} - a_{A} = T_{R2} - d_{R2} + (d_{A} - d_{B})$$

$$\text{Sender B:} \quad T_{B} + d_{B} = T_{R2} - d_{R2} \quad (15)$$

$$\text{Sender C:} \quad T_{C} + d_{C} = T_{R2} - d_{R2}$$

$$\text{Sender D:} \quad T_{D} + d_{D} = T_{R2} - d_{R2}$$

Die Synchronisationsbedingung ist also für die Sender B,C und D exakt erfüllt. Der bleibende Fehler ($d_A - d_B$) bei Sender A ist nur geringfügig, da er aus der Differenz kleiner Signallaufzeiten ähnlicher Grössenordnung besteht. Ferner sind diese Signallaufzeiten grundsätzlich bekannt, und die Differenz könnte deshalb auch kompensiert werden.

Zu der Ermittlung des Korrekturwertes K2 bleibt zu bemerken, dass dieser mittels des Wertes $T_B'$ ermittelt wird, welcher primär nur im Sender B bekannt ist. Für die anderen Sender (A) kann auf verschiedene Weise vorgegangen werden: Erfolgt der Sendebefehl für die Synchronisationsmeldung von Sender B in vorausbestimmten Abstand von einem festen Zeitwert der Uhr in B, so können die anderen Sender mittels des Sendebefehls aus der Steuereinrichtung die Zeit $T_B'$ erkennen (da $T_A = T_B$). Andernfalls kann entweder $T_B'$ oder K2 vom Sender B über die Steuereinrichtung an die anderen Sender der gleichen Gruppe (Sender A) übermittelt werden.

Bestehen mehr als zwei Gruppen, so wird auf gleiche Weise vorgegangen, indem immer zwei Gruppen miteinander synchronisiert werden und diese eine neue Gruppe bilden, welche dann erneut mit einer zweiten Gruppe synchronisiert wird, usw.

Fig. 3 zeigt das Blockschaltbild eines Funkrufsystems, bei dem das Verfahren vorzugsweise angewendet wird. Das Funkrufsystem besteht im wesentlichen aus einer mit dem öffentlichen Telefonnetz 13 verbundenen Funkrufzentrale 14 (paging terminal) sowie dem Rufnetzwerk. Das Rufnetzwerk (paging network) setzt sich aus einer Netzsteuereinheit 15 (paging network unit), mehreren damit verbundenen Sendergruppensteuereinrichtungen 16 (transmitter group controllers) and einer Mehrzahl von Sendestationen 17 zusammen. Die Sendestationen 17 sind in Gruppen zusammengefasst und jeweils mit der Sendergruppensteuereinrichtung 16 dieser Gruppe verbunden. Die Sendestationen wiederum sind in eine Schnittstelle (TSI) und den eigentlichen Sender unterteilt.

Die Funkrufzentrale bildet die Schnittstelle zum öffentlichen Telefonnetz. Sie verwaltet die Teilnehmerdaten und setzt die ankommenden Anrufe in serielle Datenströme (z.B. ins erwähnte POCSAG-Format) um.

Das Netzwerk ist hierarchisch aufgebaut. Die einzelnen Einheiten sind über Modemleitungen miteinander verbunden, auf denen sie in rein digitaler Form miteinander kommunizieren. Es werden dauernd Befehle, Meldungen über den Systemzustand und wenn nötig Alarmmeldungen ausgetauscht.

Alle Rufmeldungen werden sowohl in der Netzsteuereinheit als auch in den Sendergruppensteuereinrichtungen 16 und TSI zwischengespeichert, und es gibt für eine Rufmeldung keinen direkten Zusammenhang zwischen ihrer Ankunftszeit in der Sendestation und der Zeit ihrer Ausstrahlung durch den Sender.

Hingegen wird durch die Synchronisation garantiert, dass eine bestimmte Rufmeldung von allen Sendern zur gleichen Zeit ausgestrahlt wird.

Die Rufmeldung enthält die Kodeinformation für die nicht dargestellten Rufempfänger, die sich im Bereich des Funkrufnetzes aufhalten.

Die genannten Elemente des Funkrufsystems sind handelsüblich und bekannt. Die Sendergruppensteuereinrichtung ist zur Durchführung des Verfahrens zusätzlich mit einem Empfänger versehen, welcher auf der Frequenz der Sender arbeitet. Die Sender weisen zusätzlich eine Schaltung zur Ermittlung des Korrekturwertes und entsprechender Anpassung ihrer - bereits vorhandenen - Uhr auf. Diese Schaltung wird in der Regel durch die Mikroprozessorsteuerung des Senders implementiert.

Fig. 4 zeigt ein Blockschaltbild einer Sendergruppensteuereinrichtung. An deren Verbindungsbus 5 sind der steuernde Mikroprozessor 6, Speichermittel 7, eine Initialisierungs- und Ueberwachungsschaltung 8 und - über eine Schnittstelle 9 - der Empfänger 10 angeschlossen. Ferner sind serielle Schnittstellen 11 und Modems 12 vorgesehen, mittels denen die Steuereinrichtung über Telefonleitungen mit den Sendern 17 einerseits und der Netzsteuereinheit 15 andererseits in Verbindung steht.

## Patentansprüche

1. Verfahren zur Sendesynchronisation mehrerer Sender, welche mit einer mit einer Uhr versehenen Steuereinrichtung verbunden sind, wobei jeder Sender in bekanntem Abstand von der Steuereinrichtung angeordnet ist und eine zu synchronisierende Uhr aufweist, dadurch gekennzeichnet, dass zur Synchronisation der Uhren dieser Sender von jedem Sender eine Ist-Uhrzeitmeldung ausgestrahlt wird, die von der Steuereinrichtung mittels eines Funkempfängers empfangen wird und deren Empfangsuhrzeit in der Steuereinrichtung bestimmt und von dieser an den Sender übermittelt wird, und dass in jedem Sender Ist-Uhrzeitmeldung, Empfangsuhrzeit, Sendesignallaufzeit zwischen Sender und Funkempfänger sowie die momentane Senderuhrzeit verknüpft werden, um die synchronisierte Senderuhrzeit zu erhalten.

2. Verfahren nach Anspruch 1, dadurch gekennzeichnet, dass von der Steuereinrichtung gesteuert alle Uhren der Sender auf eine frühere Uhrzeit als die Steuereinrichtungsuhrzeit gestellt und in vorbestimmter Reihenfolge von den Sendern Synchronisationsmeldungen abgestrahlt werden, welche die jeweilige Ist-Uhrzeit der Sender als erste Zeitdaten enthalten, dass die Steuereinrichtung der ausgesandten Synchronisationsmeldung die jeweilige Empfangsuhrzeit zuordnet und diese an den jeweiligen Sender als zweite Zeitdaten übermittelt, und dass der jeweilige Sender einen Korrekturwert aus den ersten und zweiten Zeitdaten sowie der bekannten Sendesignallaufzeit bildet und die momentane Senderuhrzeit mit dem Korrekturwert verknüpft.

3. Verfahren nach Anspruch 2, dadurch gekennzeichnet, dass zur Bildung des Korrekturwertes die Sendesignallaufzeit und die Istuhrzeit von der Empfangsuhrzeit subtrahiert werden, und dass der Korrekturwert von der momentanen Senderuhrzeit subtrahiert wird, um die synchronisierte Uhrzeit zu bilden.

4. Verfahren nach Anspruch 1, wobei die mehreren Sender in zwei Gruppen angeordnet und eine erste Sendergruppensteuereinrichtung für die erste Gruppe und eine zweite Sendergruppensteuereinrichtung für die zweite Gruppe vorgesehen sind, welche miteinander in Verbindung stehen, dadurch gekennzeichnet, dass die zweite Steuereinrichtung mindestens einen Sender aus der ersten Gruppe empfangen kann, und dass zunächst die Sender der ersten Gruppe untereinander und die Sender der zweiten Gruppe untereinander synchronisiert werden, worauf in einer weiteren Synchronisationsphase die beiden Gruppen untereinander synchronisiert werden.

5. Verfahren nach Anspruch 1, wobei die mehreren Sender in mehr als zwei Sendergruppen mit jeweils zugehöriger Sendergruppensteuereinrichtung angeordnet sind und jede Steuereinrichtung mindestens einen Sender aus mindestens einer anderen Gruppe empfangen kann, dadurch gekennzeichnet, dass zunächst die Sender jeder Gruppe untereinander synchronisiert werden und in nachfolgenden weiteren Synchronisationsphasen jeweils zwei Gruppen untereinander synchronisiert werden, die eine neue Synchronisationsgruppe bilden, wobei der Vorgang wiederholt wird, bis nur noch eine Synchronisationsgruppe besteht.

6. Verfahren nach einem der Ansprüche 4 oder 5, dadurch gekennzeichnet, dass in der weiteren Synchronisationsphase, gesteuert von einer ersten Sendesteuereinrichtung, alle Senderuhren einer ersten synchronisierten Gruppe um den gleichen Betrag auf eine frühere Uhrzeit als die Steuereinrichtungssuhrzeit zurückgestellt werden und von dem im Emfpangsbereich einer zweiten Steuereinrichtung liegenden Sender der ersten Gruppe eine Synchronisationsmeldung ausgestrahlt wird, welche die Istuhrzeit des Senders als Zeitdaten enthält, die zweite Steuereinrichtung des ausgesendeten Synchronisationsmeldung die Empfangsuhrzeit zuordnet und diese über die erste Steuereinrichtung an die Sender der ersten Gruppe als Zeitdaten übermittelt, und dass für die Sender der ersten Gruppe ein zweiter Korrekturwert aus den Zeitdaten sowie der bekannten Sendesignallaufzeit zwischen dem Sender der ersten Gruppe und dem Empfänger der zweiten Sendesteuereinrichtung gebildet wird, und die momentane Senderuhrzeit mit dem Korrekturwert verknüpft wird.

7. Steuereinrichtung mit einer Uhr zur Durchführung des Verfahrens zur Synchronisation mehrerer, mit einer Uhr versehener Sender nach Anspruch 1, dadurch gekennzeichnet, dass die Steuereinrichtung

7

einen Funkempfänger zum Empfang der ausgestrahlten, die Ist-Uhrzeitmeldung enthaltenden Sendersignale aufweist.

8. Sender zur Durchführung des Verfahrens zur Sendesynchronisation mehrerer Sender, welche mit einer Steuereinrichtung verbunden sind, die mit einer Uhr versehen ist, nach Anspruch 1, dadurch gekennzeichnet, dass der Sender eine Schaltung zur Ermittlung des Korrekturwertes und eine durch den Korrekturwert beeinflussbare Uhr aufweist.

9. Anwendung des Verfahrens nach Anspruch 1 in einem Funkrufnetz, welches mehrere Sendegruppen mit zugehörigen Sendergruppensteuereinrichtungen aufweist, welche ihrerseits über eine Netzsteuereinrichtung verbunden sind.

**Claims**

1. Method for the synchronization of a plurality of transmitters, which are connected to a control unit provided with a clock, wherein each transmitter is located in a known distance from the control unit and comprises a clock to be synchronized, characterized in that for the synchronization of the clocks of these transmitters an actual-time information is transmitted by each transmitter and is received by the control unit by means of a radio receiver, the receiving time of which being determined in the control unit and transmitted from the same to the transmitter and in that in each transmitter the synchronized transmitter clock time is derived from the actual-time information, the receiving time, the transmitter signal propagation time from the transmitter to the radio receiver and the momentary time of the transmitter clock.

2. Method according to claim 1, characterized in that under the control of the control unit all the clocks of the transmitters are set back to a time earlier than the time of the clock of the control unit and synchronization messages are transmitted from the transmitters in a predetermined order comprising as first time data the actual time of the transmitters, in that the control unit assigns to the transmitted synchronization message the respective receiving time and transmits them to the respective transmitter as second time data, and in that in the respective transmitter a correction value is determined from the first and second time data and the known transmitter signal propagation time and the momentary transmitter clock time is combined with the correction value.

3. Method according to claim 2, characterized in that for determining the correction value the transmitter signal propagation time and the actual time are subtracted from the receiving time and in that the correction value is subtracted from the momentary transmitter clock time to receive the synchronized clock time.

4. Method according to claim 1, wherein the plurality of transmitters are arranged in two groups, a first transmitter group control unit and a second transmitter group control unit being provided for the first and the second group, respectively, which are connected to each other, characterized in that the second control unit is able to receive the signals of at least a transmitter from the first group and in that firstly the transmitters of the first group and the transmitters of the second group are synchronized whereafter in a further synchronization phase the two groups are synchronized to each other.

5. Method according to claim 1, wherein the plurality of transmitters are arranged in more than two transmitter groups having an associated transmitter group control unit each and each control unit is able to receive at least a transmitter signal of at least one of the other groups, characterized in that firstly the transmitters of each group are synchronized and during subsequent synchronization phases two of these groups are synchronized with each other to form a new synchronization group which process is continued until there is only one synchronization group.

6. Method according to one of the claims 4 or 5, characterized in that in a further synchronization phase controlled of a first transmitter control unit, all transmitter clocks of a first synchronized group are set back for the same amount of time to a clock time earlier than the same of the control unit, in that a synchronization message is transmitted by a transmitter of the first group to be received by a second control unit comprising the actual time of the transmitter as time data, wherein the second control unit assigns the receiving time to the transmitted synchronization message and transmits the same as time data via the first control unit to the transmitters of first group, and in that for the transmitters of the first group a second correction value is determined from the time data and the known transmitter signal propagation time between the transmitter of the first group and the receiver of the second transmitter control unit and the momentary transmitter time is combined with the correction value.

7. Control unit with a clock for performing the method for the synchronization of a plurality of transmitters provided with clocks according to claim 1, characterized in that the control unit comprises a radio receiver for receiving the transmitted transmitter signals containing an actual time information.

8. Transmitter for performing the method for the synchronization of the transmission of a plurality of transmitters connected with a control unit provided with a clock according to claim 1, characterized in that the transmitter comprises a circuit for determining the correction value and a clock which is controlled by the correction value.

9. Use of the method of claim 1 in a radio paging network comprising several groups of transmitters with associated transmitter group control units, which are connected to each other via a network control unit.

**Revendications**

1. Procédé de synchronisation à l'émission de plusieurs émetteurs, qui sont raccordés à un dispositif de commande équipé d'une horloge, chaque émetteur étant disposé à une distance connue par rapport au dispositif de commande et possédant une horloge devant être synchronisée, caractérisé en ce que pour la synchronisation des horloges de ces émetteurs, chaque émetteur émet une signalisation d'heure réelle, qui est reçue par le dispositif de commande au moyen d'un récepteur radio et dont l'heure de réception est déterminée dans le dispositif de commande et est retransmise par ce dernier à l'émetteur, et que dans chaque émetteur, la signalisation d'heure réelle, l'heure de réception, le temps de propagation des signaux d'émission entre l'émetteur et le récepteur radio ainsi que l'heure instantanée de l'émetteur sont combinés pour l'obtention de l'heure synchronisée de l'émetteur.

2. Procédé selon la revendication 1, caractérisé en ce que toutes les horloges des émetteurs sont réglées, d'une manière commandée par le dispositif de commande, sur une heure antérieure par rapport à l'heure du dispositif de commande et que des signalisations de synchronisation, qui contiennent respectivement les heures réelles respectives des émetteurs en tant que première donnée de temps, sont émises par les émetteurs selon une séquence prédéterminée, que le dispositif de commande associe à la signalisation de synchronisation émise l'heure respective de réception et retransmet cette dernière aux émetteurs respectifs en tant que seconde donnée de temps, et que l'émetteur respectif forme une valeur de correction à partir des première et seconde données de temps ainsi qu'à partir du temps connu de propagation des signaux d'émission et combine l'heure instantanée de l'émetteur à la valeur de correction.

3. Procédé selon la revendication 2, caractérisé en ce que pour la formation de la valeur de correction, le temps de propagation des signaux d'émission et l'heure réelle sont soustraits de l'heure de réception et que la valeur de correction est soustraite de l'heure instantanée de l'émetteur pour former l'heure synchronisée.

4. Procédé selon la revendication 1, selon lequel les différents émetteurs sont disposés suivant deux groupes et il est prévu un premier dispositif de commande pour le premier groupe d'émetteurs et un second dispositif de commande pour le second groupe d'émetteurs, ces dispositifs étant raccordés entre eux, caractérisé en ce que le second dispositif de commande peut recevoir au moins un émetteur du premier groupe et que tout d'abord les émetteurs du premier groupe sont synchronisés entre eux et les émetteurs du second groupe sont synchronisés entre eux, à la suite de quoi les deux groupes sont synchronisés entre eux lors d'une phase ultérieure de synchronisation.

5. Procédé selon la revendication 1, selon lequel les différents émetteurs sont disposés dans plus de deux groupes d'émetteurs, auxquels est associé respectivement un dispositif de commande de groupe d'émetteurs, et chaque dispositif de commande peut recevoir un émetteur d'au moins un autre groupe, caractérisé en ce que tout d'abord les émetteurs de chaque groupe sont synchronisés entre eux et respectivement deux groupes, qui forment un nouveau groupe de synchronisation, sont synchronisés entre eux lors d'autres phases ultérieures de synchronisation, l'opération étant répétée jusqu'à ce qu'il ne reste plus qu'un groupe de synchronisation.

6. Procédé selon l'une des revendications 4 ou 5, caractérisé en ce que pendant l'autre phase de synchronisation, toutes les horloges des émetteurs d'un premier groupe synchronisé sont rétrogradées de la même valeur à une heure antérieure à l'heure du dispositif de commande, d'une manière commandée par un premier dispositif de commande, et que l'émetteur du premier groupe, qui est situé dans la zone de réception d'un second dispositif de commande, émet une signalisation de synchronisation qui contient l'heure réelle de l'émetteur en tant que donnée de temps, que le second dispositif de commande de la signalisation émise de synchronisation associe l'heure de réception et retransmet cette dernière en tant que donnée de temps aux émetteurs du premier groupe par l'intermédiaire du premier dispositif de commande, et que pour les émetteurs du premier groupe, une seconde valeur de correction est formée à partir des données de temps ainsi que de la durée connue de propagation des signaux d'émission entre l'émetteur du premier groupe et le récepteur du second dispositif de commande d'émission, et que l'heure instantanée de l'émetteur est combinée à la valeur de correction.

7. Dispositif de commande comportant une horloge pour la mise en oeuvre du procédé de synchronisation de plusieurs émetteurs équipés d'une horloge, selon la revendication 1, caractérisé en ce que le dispositif de commande comporte un récepteur radio servant à recevoir les signaux émis d'émetteurs, qui contiennent la signalisation de l'heure réelle.

8. Emetteur pour la mise en oeuvre du procédé de synchronisation d'émission de plusieurs émetteurs, qui sont raccordés à un dispositif de commande équipé d'une horloge, selon la revendication 1, caractérisé en ce que l'émetteur comporte un circuit pour déterminer la valeur de correction et une horloge pouvant être influencée par la valeur de correction.

9. Application du procédé selon la revendication 1 dans un réseau radioélectrique d'appels, qui comporte plusieurs groupes d'émetteurs auxquels sont associés les dispositifs de commande de groupes d'émetteurs, qui sont raccordés, pour leur part, par l'intermédiaire d'un dispositif de commande du réseau.

# Fig.1

# Fig. 2

## Fig. 4

## Fig. 3